# EUROPÄISCHE PATENTSCHRIFT

(11) **EP 2 769 936 B1**
(45) Veröffentlichungstag und Bekanntmachung des Hinweises auf die Patenterteilung: **15.11.2017**
(21) Anmeldenummer: 14156224.9
(22) Anmeldetag: 21.02.2014
(51) Int. Cl.: B65G 1/137

(54) **Kommissionieranlage und Kommissionierplatz sowie Verfahren zur Kommissionierung von gegenständen**
Picking system and picking area and method for order picking of articles
Installation de préparation et poste de préparation, ainsi que procédé de préparation d'objets

(30) Priorität: 21.02.2013 DE 102013101750
(43) Veröffentlichungstag der Anmeldung: 27.08.2014
(73) Patentinhaber: Winkler, Walter, 92711 Parkstein (DE)
(72) Erfinder: Winkler, Walter, 92711 Parkstein (DE)
(74) Vertreter: Lang, Christian

(56) Entgegenhaltungen:
- EP-A1- 1 626 013
- EP-A1- 1 790 591
- EP-A1- 2 327 644
- WO-A1-2007/068406
- DE-A1-102006 057 266
- DE-U1- 20 112 328
- JP-A- S54 131 278

## Beschreibung

### GEBIET DER ERFINDUNG

Die vorliegende Erfindung betrifft eine Kommissionieranlage sowie einen Kommissionierplatz hierfür und ein Verfahren zur Kommissionierung von verschiedenen Artikeln (Gegenständen) in einen Auftragsbehälter, bei welchen mindestens ein Auftragsbehälter an mindestens einem Beladeplatz bereitgestellt wird, in welchem verschiedene Artikel aus Lagerbehältern kommissioniert werden, die nacheinander mit den zu kommissionierenden Artikeln automatisiert an einer Entnahmeposition bereitgestellt werden, sodass die Artikel aus dem jeweiligen Lagerbehälter entnommen und in den Auftragsbehälter überführt werden können.

### STAND DER TECHNIIK

Unter Kommissionieren versteht man das Zusammenstellen von bestimmten Gegenständen oder Artikeln aus einem Lagerbestand oder einem Sortiment entsprechend einer Bestellung oder einem Auftrag. Unter Kommissionierung wird somit insbesondere jeder Vorgang verstanden, bei welchem Artikel, also allgemein jegliche Art von Gegenständen, die in einer größeren Stückzahl oder als Gesamtmenge gelagert werden, zu einer kleineren Einheit oder Packmenge mit insbesondere verschiedenen Artikeln zusammengestellt werden. Beispiele hierfür sind Kommissioniervorgänge bei Versandhändlern oder bei Verteilzentren von Einzelhandelsgeschäften, bei denen unterschiedliche Artikel zu einer Kundenbestellung oder einer Bestellung einer Einzelhandelsfiliale zusammengestellt werden müssen. Aber auch Kommissioniervorgänge in Produktionsanlagen, bei denen verschiedene Artikel für einen Produktionsschritt zusammengestellt werden, sind hierdurch umfasst.

Bei Kommissionieranlagen und - verfahren sind die Artikel oder Gegenstände üblicherweise in Behältern aufgenommen, die eine Lagerung und/oder einen Transport erlauben. Unter derartigen Lagerbehältern werden bei der vorliegenden Erfindung sämtliche Behälter, wie Kartons, Kunststoffbehälter, Tablare, Paletten und dergleichen verstanden, die eine Lagerung und/oder einen automatisierten Transport ermöglichen. Das Gleiche gilt für die Auftragsbehälter in die die zu kommissionierenden Artikel kommissioniert werden. Auch hier wird für die vorliegende Beschreibung unter Behälter jede Form von Hilfsmittel verstanden, die zur Lagerung und/oder zum Transport dienen kann, wie Kartons, Paletten, Rollcontainer, Container oder dergleichen.

Bei Kommissionierverfahren und entsprechenden Anlagen hierzu wird unterschieden zwischen dem Kommissionierprinzip "Mann zur Ware" oder "Ware zum Mann".

Bei dem ersten Kommissionierprinzip "Mann zur Ware" wird ein Auftragsbehälter, in dem verschiedene Artikel zusammengestellt werden sollen, automatisiert oder durch eine Bedienperson zu verschiedenen Lagerbehältern geführt, in denen die verschiedenen, zu kommissionierenden Artikel lagern, sodass automatisiert oder durch eine Bedienperson die benötigten Artikel aus den Lagerbehältern entnommen und in den Auftragsbehälter überführt werden können.

Bei dem Kommissionierprinzip "Ware zum Mann" werden die Lagerbehälter, in denen die verschiedenen Artikel gelagert sind, zu einem festen Kommissionierplatz gebracht, bei welcher die entsprechenden Artikel aus den herbeigeführten Lagerbehältern automatisiert oder durch eine Bedienperson entnommen und wiederum in einen Auftragsbehälter überführt werden, mit dem die kommissionierten Artikel entsprechend versendet werden können.

Bei der vorliegenden Erfindung handelt es sich um eine Kommissionieranlage bzw. einen Kommissionierplatz und einen Bereitstellungsförderer hierfür sowie ein Verfahren zur Kommissionierung, bei welchem das Prinzip "Ware zum Mann" verwirklicht wird.

Aus der WO 2005/066046 A1, der gattungsgemäßen DE 201 12 328 U1, EP 1 626 013 A1, WO 2007/068406, DE 10 2006 057 266 A1 und der DE 10136354 A1 sind bereits Kommissionieranlagen und Kommissionierplätze bekannt, bei denen Lagerbehälter aus einem Lager automatisiert entnommen und einem Kommissionierplatz zugeführt werden, wobei aus dem Lagerbehälter die erforderlichen Artikel entnommen und in einen Auftragsbehälter überführt werden.

Derartige Anlagen und Kommissionierverfahren müssen eine Vielzahl von Anforderungen erfüllen, die teilweise konträr zueinander sind, wie beispielsweise hohe Kommissionierleistung, sicherer und zuverlässiger Betrieb, ergonomische Arbeitsabläufe und Wirtschaftlichkeit der Anlagen und Verfahren.

### OFFENBARUNG DER ERFINDUNG

### AUFGABE DER ERFINDUNG

Es ist deshalb Aufgabe der vorliegenden Erfindung, eine Kommissionieranlage bzw. einen Kommissionierplatz und ein Verfahren zur Kommissionierung von verschiedenen, gelagerten Artikeln in Auftragsbehälter und entsprechende Komponenten hierfür bereitzustellen, die eine optimale Verwirklichung der oben angegebenen Anforderungen hinsichtlich Kommissionierleistung, Zuverlässigkeit, ergonomische Arbeitsabläufe und Wirtschaftlichkeit bieten.

### TECHNISCHE LÖSUNG

Diese Aufgabe wird gelöst durch ein Verfahren mit den Merkmalen des Anspruchs 1, einem Kommissionierplatz mit den Merkmalen des Anspruchs 5 und einer Kommissionieranlage mit den Merkmalen des Anspruchs 11. Vorteilhafte Ausgestaltungen sind Gegenstand der abhängigen Ansprüche.

Nach einem ersten Aspekt der vorliegenden Erfindung, für den selbständig und in Kombination mit den anderen Aspekten der vorliegenden Erfindung Schutz begehrt wird, wird ein Kommissionierplatz und ein Verfahren zur Kommissionierung von verschiedenen Artikeln in Auftragsbehälter vorgeschlagen, bei welchem mindestens ein Auftragsbehälter an mindestens einem Beladeplatz bereitgestellt wird, in welchen die verschiedenen Artikel aus Lagerbehältern kommissioniert werden, die nacheinander mit verschiedenen Artikeln automatisiert an einer Entnahmeposition bereitgestellt werden, sodass die Artikel aus dem jeweiligen Lagerbehälter entnommen und in den Auftragsbehälter überführt werden können. Das erfindungsgemäße Verfahren sieht vor, dass der an der Entnahmeposition bereitgestellte Lagerbehälter bereits unmittelbar nach der Entnahme der zu entnehmenden Artikel in eine Nach - Entnahmeposition befördert wird, während gleichzeitig der nächste Lagerbehälter, der in einer Vor - Entnahmeposition in einer Warteposition bereitgehalten worden ist, in die Entnahmeposition überführt wird. Durch die Maßnahme, dass unmittelbar nach der Entnahme der zu kommissionierenden Artikel aus dem Lagerbehälter der nächste Lagerbehälter in die Entnahmeposition gebracht wird, wird erreicht, dass keine unnötigen Wartezeiten durch die Beförderung des nächsten bereit zu stellenden Lagerbehälters entstehen. Nach dem Stand der Technik wird die Bereitstellung des nächsten Lagerbehälters erst dann vorgenommen, wenn der Kommissioniervorgang abgeschlossen ist, also die zu kommissionierenden Artikel im Auftragsbehälter abgelegt sind, so dass eine längere Zeitspanne bis zur Bereitstellung des nächsten Lagerbehälters vergeht. Üblicherweise wird die Beendigung eines Kommissioniervorgangs durch Ablegen der erforderlichen Artikel im Auftragsbehälter durch ein Quittiersignal bestätigt, das von der Bedienperson erzeugt wird, um einer Steuerungs- und/oder Regelungseinheit der Kommissionieranlage zu signalisieren, dass der nächste Lagerbehälter mit den nächsten Artikeln bereitgestellt werden kann. Erfindungsgemäß wird somit das Quittiersignal bereits direkt nach der Entnahme der zu kommissionierenden Artikel aus dem Lagerbehälter erzeugt, so dass keine Wartezeit nach der Beendigung des Kommissioniervorgangs entsteht, bis der nächste Lagerbehälter in der Entnahmeposition ist. Obwohl dieses Verfahren im Wesentlichen für manuelle Kommissioniervorgänge mit einer Bedienperson Anwendung findet, kann es in gleicher Weise bei vollautomatisierten Kommissioniervorgängen eingesetzt werden.

Nach dem vollständigen Abschluss eines Kommissioniervorgangs, also nach dem Ablegen der zu kommissionierenden Artikel aus einem Lagerbehälter in den oder die Auftragsbehälter, kann ein zweites Quittiersignal erzeugt werden, sodass der in der Nach - Entnahmeposition befindliche Lagerbehälter endgültig aus dem Bereich des Kommissionierplatzes weg bewegt wird. Zugleich kann ein weiterer Lagerbehälter in die Vor - Entnahemposition nachrücken. Vor dem zweiten Quittiersignal wird der Lagerbehälter in der Nach - Entnahmeposition gehalten und die Vor - Entnahmeposition wird unbesetzt gelassen, um im Falle, dass der Kommissioniervorgang nicht korrekt abgeschlossen werden konnte, den entsprechenden Lagerbehälter aus der Nach - Entnahmeposition zurückzubringen, wobei der in der Entnahmeposition befindliche Lagerbehälter in die Vor - Entnahmeposition zurückgeführt werden muss.

Sollte der in der Nach - Entnahmeposition befindliche Lagerbehälter in die Entnahmeposition zurück geholt werden müssen, kann ein Reversiersignal erzeugt werden, z.B. wenn die Bedienperson feststellt, dass der Kommissioniervorgang nicht oder nicht korrekt abgeschlossen worden ist. Beispielsweise könnte beim Überführen eines Artikels aus dem Lagerbehälter in den Auftragsbehälter der Artikel beschädigt oder zerstört werden, sodass der Kommissioniervorgang nicht abgeschlossen werden kann. In diesem Fall kann durch das Reversiersignal der Lagerbehälter in der Nach - Entnahmeposition in die Entnahmeposition zurückgeführt und der in der Entnahmeposition befindliche Lagerbehälter in die Vor - Entnahmeposition geführt werden. Dann kann die Bedienperson die fehlenden Artikel aus dem Lagerbehälter entnehmen und den Kommissioniervorgang abschließen. Nach der Entnahme der fehlenden Artikel kann wiederum ein erstes Quittersignal erzeugt werden, sodass der Lagerbehälter wieder in die Nach - Entnahmeposition verschoben wird, während der Lagerbehälter aus der Vor - Entnahmeposition in die Entnahmeposition geführt wird. Nach Ablegen der zu kommissionierenden Artikel im Auftragsbehälter und Feststellen, dass der Kommissioniervorgang vollständig und korrekt abgeschlossen worden ist, kann nunmehr das zweite Quittiersignal erzeugt werden, um den Kommissioniervorgang mit Artikeln aus diesem Lagerbehälter endgültig abzuschließen. Dann schließt sich der nächste Kommissioniervorgang mit dem nächsten Lagerbehälter in der Entnahmeposition an. Durch das beschriebene schnelle Quittieren bereits nach dem Entnehmen der Artikel aus dem Lagerbehälter und dem dem zweistufigen Quittieren oder Zwei - Schritt - Quittieren zum Abschließen eines Quittiervorgangs kann eine Beschleunigung des Kommissionierens erreicht werden, ohne dass die Flexibilität und Zuverlässigkeit des Verfahrens beeinträchtigt wird.

Zur Verwirklichung eines derartigen Verfahrens weist der Kommissionierplatz einer entsprechenden Kommissionieranlage erfindungsgemäß eine Bereitstellungsfördereinrichtung auf, die eine Lagerbehälterzuführeinrichtung und eine Lagerbehälterabführeinrichtung sowie entsprechend eine Entnahmeposition für einen Lagerbehälter und eine Vor - Entnahmeposition sowie eine Nach - Entnahmeposition für weitere Lagerbehälter zwischen der Lagerbehälterzuführeinrichtung und der Lagerbehälterabführeinrichtung umfasst. Die Entnahmeposition sowie die Vor - Entnahmeposition und die Nach - Entnahmeposition sind erfindungsgemäß durch jeweils separat betätigbare Fördersegmente gebildet, sodass ein Lagerbehälter unabhängig von der Betätigung weiterer, nicht beteiligter Fördersegmente von einer Position zur anderen und zurück wechseln kann. Zusätzlich werden erfindungsgemäß auch die Lagerzuführeinrichtungen und die Lagerbehälterabführeinrichtung entsprechend separat betätigt, sodass diese ebenfalls unabhängig von einer Bewegung der Lagerbehälter in den anderen Positionen eine Bewegung sowie Bereitstellung und/oder Abtransport von Lagerbehältern ermöglichen können.

Eine entsprechende Bereitstellungsfördereinrichtung kann in verschiedener Art und Weise bzw. in verschiedenen Formen realisiert werden und zwar durch geradlinige oder gebogene Fördersegmente und entsprechende Kombinationen daraus, sofern die entsprechenden Positionen, also die Entnahmeposition, die Vor - Entnahmeposition und die Nach - Entnahmeposition für die Lagerbehälter realisiert werden können.

Eine besonders vorteilhafte Gestaltung, ist durch einen 270°-Kurvenförderer gegeben, bei dem mehrere Segmente eine Förderstrecke entlang eines Teilkreises von 270° bilden, wobei auch Abweichung von +/- 10%, insbesondere +/- 5 % des Winkelbereiches möglich sind.

Durch den 270°-Kurvenförderer kann eine Platz sparende und zugleich ergonomische Anordnung der entsprechenden Positionen für die Lagerbehälter insbesondere in Bezug auf bereitgestellte Beladeplätze für Auftragsbehälter realisiert werden.

Die Bereitstellungsfördereinrichtung kann weiterhin dadurch vorteilhaft ergonomisch gestaltet werden, wenn der Lagerbehälter in der Entnahmeposition gegenüber der Horizontalen verkippt werden kann, und zwar insbesondere um 20° bis 60°, vorzugsweise um 30° bis 45° gegenüber der Horizontalen. Dadurch ist es für die Bedienperson möglich, leichter in den Lagerbehälter greifen zu können und einen besseren Überblick über den Inhalt des Lagerbehälters zu erhalten.

Des Weiteren kann die Bereitstellungsfördereinrichtung so ausgebildet sein, dass in einer der Positionen der Lagerbehälter, insbesondere in der Entnahmeposition, eine Waage vorgesehen ist, mit der das Gewicht des Lagerbehälters ermittelt werden kann, sodass durch die Bestimmung des Gewichts bzw. der Gewichtsdifferenz vor und nach der Entnahme die Anzahl der Artikel im Lagerbehälter bestimmt und an eine entsprechende Steuerungs- und/oder Regelungseinheit der Kommissionieranlage übermittelt werden kann.

Bei der beschriebenen Bereitstellungsfördereinrichtung, die Teil eines Kommissionierplatzes bzw. eines Kommissionieranlage ist, sowie dem vorgestellten Verfahren zur Kommissionierung von Artikeln, wird eine Steuerungs- und/oder Regelungseinheit verwendet, die den Kommissioniervorgang steuert und/oder regelt, indem die erfassten Kommissionieraufträge so aufbereitet werden, dass in einer effektiven Weise die erforderlichen Lagerbehälter aus einem Lager ausgelagert und dem entsprechenden Kommissionierplatz in der richtigen Reihenfolge zugeführt werden, sodass die gewünschten Artikel aus den Lagerbehältern entnommen und in die Auftragsbehälter überführt werden können. Dazu kann die Steuerungs- und/oder Regelungseinheit der Kommissionieranlage vielfältige Parameter zur Optimierung des Kommissioniervorgangs berücksichtigen, die in einer entsprechenden Software hinterlegt sein können. Ein Parameter besteht beispielsweise darin die Kommissionieraufträge nicht nur einzeln abzuarbeiten, sondern Kommissionieraufträge auch unter Berücksichtigung anderer Aufträge zu erledigen.

So kann ein entsprechender Kommissionierplatz einer Kommissionieranlage nicht nur einen Beladeplatz mit einem Auftragsbehälter aufweisen, sondern mehrere Beladeplätze, die jeweils mindestens einen Auftragsbehälter aufnehmen, sodass gleichzeitig mehrere Aufträge kommissioniert werden können. Insbesondere kann dadurch die erforderliche Anzahl der Transporte der Lagerbehälter eingeschränkt werden, wenn beispielsweise verschiedene Aufträge gleiche Artikel enthalten, sodass der Lagerbehälter lediglich ein Mal an dem Kommissionierplatz bereitgestellt werden muss und gleichzeitig Waren in mehrere Auftragsbehälter kommissioniert werden können.

Neben einer Steuerungs- und/oder Regelungseinheit zur Steuerung und/oder Regelung der gesamten Kommissionieranlage, die das Auslagern der Lagerbehälter aus dem Lager, den Transport der Lagerbehälter zu einem oder mehreren Kommissionierplätzen der Kommissionieranlage sowie den Rücktransport der Lagerbehälter von dem oder den Kommissionierplätzen zum Lager und den Antransport von leeren Auftragsbehältern und Abtransport der fertig kommissionierten Auftragsbehälter überwacht, steuert und regelt, können in den einzelnen Komponenten der Kommissionieranlage, wie beispielsweise der Lagereinrichtung, den Förderstrecken oder den Kommissionierplätzen separate Steuerungs- und/oder Regelungseinrichtungen vorgesehen sein, die zur Steuerung und/oder Regelung einzelner Teilbereiche dienen und über entsprechende Schnittstellen mit einer Steuerungs- und/oder Regelungseinheit der gesamten Kommissionieranlage verbunden sein können. Es kann eine vorteilhafte Ergonomie der Kommissionierplatzes dadurch erzielt werden, dass die Arbeitshöhe des Beladeplatzes und/oder der Entnahmeposition verändert wird. Hierzu wird vorgeschlagen, an einem oder mehreren Gestellen, die den Beladeplatz und/oder die Entnahmeposition lagern, eine Schubanordnung vorzusehen, die mindestens eine, vorzugsweise mehrere Plattformen aufweist, die aus dem Gestell oder den Gestellen herausgezogen werden können, um die Arbeitshöhe zu verringern. Die Plattformen dienen hierbei als Standplatz für die Bedienperson oder eine Sitzeinrichtung, so dass der Abstand zwischen Plattform und Beladeplatz und/oder Entnahmeposition die Arbeitshöhe definiert. Entsprechend ist die Schubanordnung mit der einen oder mehreren Plattformen in der Nähe des Bodens an den Gestellen vorgesehen, sodass die Plattformen parallel zum Boden, auf dem die Gestelle für den Beladeplatz und/oder die Entnahmeposition gelagert sind, angeordnet werden können.

Eine Schubanordnung kann eine oder mehrere Plattformen umfassen, die in verschiedenen Höhen zwischen Boden und Arbeitsebene, in der Beladeplätze und Entnahmeposition vorgesehen sind, an den Gestellen angeordnet sind, um die Einstellung unterschiedlicher Arbeitshöhen zu ermöglichen.

Eine ergonomische Ausgestaltung des Kommissionierplatzes kann auch dadurch erreicht werden, dass die Entnahmeposition eine Bedienfront aufweist, die in einem Winkel von 100° bis 120°, insbesondere 110°, zur Bedienfront des mindestens einen Beladeplatzes des Kommissionierplatzes angeordnet ist. Dadurch ergibt sich eine günstige Positionierung der Bedienperson in dem Winkel zwischen Entnahmeposition und Beladeplatz, die eine effektive Kommissionierung ermöglicht. Als Bedienfront wird eine Kante der Entnahmeposition und des Beladeplatzes verstanden, an der die Bedienperson beim Kommissioniervorgang positioniert ist. Bei einer gekrümmten oder geschwungenen Kante wird eine Tangente oder Sekante, die die Richtung der Bedienfront im Wesentlichen angibt, zur Bestimmung des Winkels herangezogen.

Ein Kommissionierplatz kann mehrere Beladeplätze aufweisen, die entlang einer Geraden nebeneinander angeordnet sein können. Beispielsweise können vier bis fünf Beladeplätze nebeneinander vorgesehen sein, um eine entsprechende Zahl von Kommisssionieraufträgen parallel bearbeiten zu können.

Ein Kommissionierplatz weist jeweils eine separate Auftragsbehälterzuführförderstrecke und Auftragsbehälterabführförderstrecke sowie jeweils eine Lagerbehälterzuführförderstrecke und eine Lagerbehälterabführstrecke auf, wobei jedoch zumindest teilweise die einzelnen Förderstrecken miteinander kombiniert sein können, sodass beispielsweise eine kombinierte Behälterabführförderstrecke für die Auftragsbehälter und die Lagerbehälter realisiert sein kann.

Die Lagerbehälterzuführförderstrecke eines Kommissionierplatzes kann zudem eine Sequenziereinheit umfassen, die Speicherplätze für einzelne Lagerbehälter aufweist, sodass die Reihenfolge der zugeführten Lagerbehälter im Bereich eines Kommissionierplatzes noch geändert werden kann oder in Kürze wieder benötigte Lagerbehälter in den Kommissionierplätzen vorgehalten werden können, ohne diese in das Lager zurückführen zu müssen.

Entsprechend wird nach einem weiteren Aspekt der vorliegenden Erfindung, für den selbstständig und in Kombination mit anderen Aspekten der vorliegenden Erfindung Schutz begehrt wird, eine Kommissionieranlage vorgeschlagen, die mindestens einen, vorzugsweise mehrere Kommissionierplätze, insbesondere Kommissionierplätze nach einem Aspekt der vorliegenden Erfindung, sowie mindestens eine Ein - und/oder Auslagerungseinheit für ein Lager sowie eine Hauptförderschleife in einer geschlossenen Ringbahn aufweist, die die Verteilung der Lagerbehälter und/oder der Auftragsbehälter vom Lager und in das Lager sowie zu den einzelnen Kommissionierplätzen ermöglicht.

Um eine vorteilhafte, ergonomische Gestaltung der gesamten Kommissionieranlage zu erzielen, kann die Fördertechnik der entsprechenden Komponenten, wie der Hauptförderschleife, der Kommissionierplätze und der Ein- und/oder Auslagerungseinheiten für Lagerbehälter in einer einzigen Ebene angeordnet sein, sodass beispielsweise für Wartungs- und Reparaturarbeiten ausreichender Raum unterhalb der Fördertechnik und eine leichte Zugänglichkeit aller Komponenten von oben und unten gegeben ist. Entsprechend können Kreuzungspunkte von Förderstrecken ebenfalls in der gleichen Ebene realisiert sein.

Die Kommissionierplätze der Kommissionieranlage können spiegelsymmetrisch zueinander angeordnet sein, so dass zwischen den Bedienerplätzen der benachbarten Kommissionierplätze kurze Verbindungswege gegeben sind, so dass unter bestimmten Umständen zwei Kommissionierplätze von einer Bedienperson bedient werden können.

Um ruhige Arbeitsplätze zu schaffen, können die Kommissionierplätze ein Gehäuse aufweisen, das bis auf die Entnahmeposition und die Beladeplätze alle übrigen Komponenten weitgehend vollständig einschließt, so dass die Lärmbelastung so weit wie möglich reduziert wird. Zusätzlich oder alternativ können die Bereiche mit der Fördertechnik und/oder das Lager mit den Ein- und/oder Auslagerungseinheiten durch eine Trennwand von den Kommissionierplätzen abgetrennt sein.

### KURZBESCHREIBUNG DER FIGUREN

Die beigefügten Zeichnungen zeigen in rein schematischer Weise in
- Fig. 1: eine Draufsicht auf eine erste Ausführungsform einer erfindungsgemäßen Kommissionieranlage;
- Fig. 2: eine Draufsicht auf eine zweite Ausführungsform einer erfindungsgemäßen Kommissionieranlage;
- Fig. 3: eine Draufsicht auf eine dritte Ausführungsform einer erfindungsgemäßen Kommissionieranlage;
- Fig. 4: eine Draufsicht auf eine vierte Ausführungsform einer erfindungsgemäßen Kommissionieranlage;
- Fig. 5: eine Draufsicht auf eine fünfte Ausführungsform einer erfindungsgemäßen Kommissionieranlage; und in
- Fig. 6: in den Teilbildern a bis k weitere Ausführungsformen erfindungsgemäßer Kommissionierplätze.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen deutlich. Allerdings ist die Erfindung nicht auf diese Ausführungsbeispiele beschränkt.

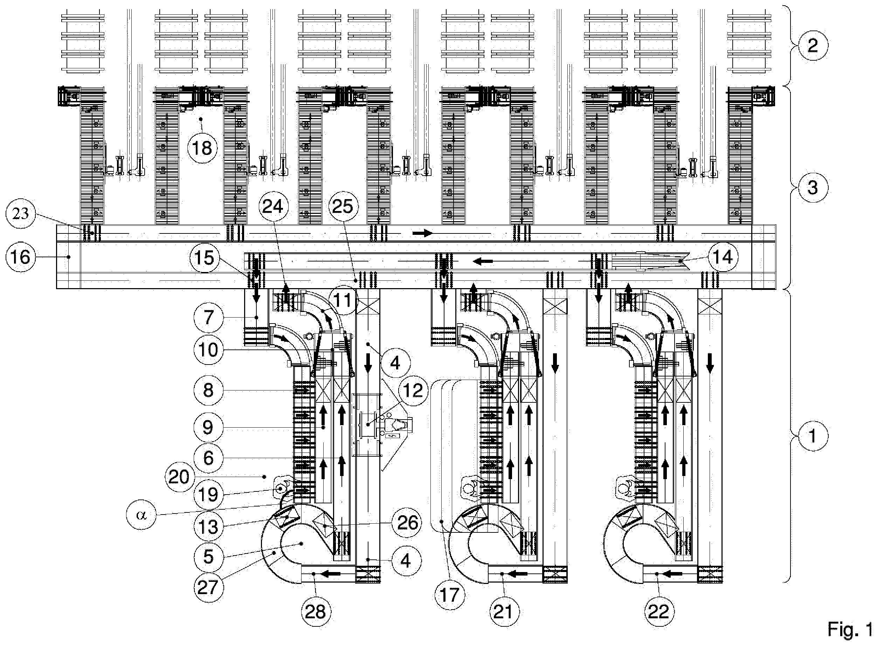

Die Fig. 1 zeigt in einer Draufsicht eine erste Ausführungsform einer erfindungsgemäßen Kommissionieranlage. Die Kommissionieranlage umfasst ein Lager 2, in welchem eine Vielzahl von verschiedenen Artikeln gelagert werden, die in der Kommissionieranlage in entsprechende Auftragsbehälter kommissioniert werden sollen.

An das Lager 2 schließt sich eine sogenannte fördertechnische Vorzone 3 an, die das Lager 2 mit den Kommissionierplätzen 20, 21 und 22 in der Kommissionierzone 1 verbindet. Die fördertechnische Vorzone umfasst mehrere Ein - und/oder Auslagerungseinheiten 18, mit deren Hilfe Lagerbehälter, in denen die Artikel gelagert sind, aus dem Lager 2 ausgelagert oder in dieses eingelagert werden können. Die Ein- und/oder Auslagerungseinheiten 18 weisen Förderstrecken und Regalbediengeräte auf, um die Artikel in das Lager 2 zu transportieren und/oder die Artikel aus dem Lager zu entnehmen. Die Lagerbehälter können durch verschiedenste Behälter realisiert werden, wobei der Begriff des Behälters sehr allgemein verstanden wird und Kartons, Kunststoffbehälter, Tablare, Paletten und dergleichen einschließt. Die Lagerbehälter können auch unterteilt sein oder Einsätze aufweisen.

In der fördertechnischen Vorzone 3 ist weiterhin eine ringförmige Förderstrecke 16 vorgesehen, die auch als Hauptförderschleife 16 oder als Hauptloop 16 bezeichnet werden kann. Auf der ringförmigen Förderstrecke 16 können die entsprechenden Behälter, also sowohl Lagerbehälter, mit denen die Artikel im Lager gelagert werden, als auch Auftragsbehälter, mit denen die kommissionierten Waren versendet werden, im Kreis befördert werden. Entsprechend sind in der ringförmigen Förderstrecke 16 Zuführ- und Abgabestellen für Lagerbehälter und/oder Auftragsbehälter vorgesehen, an denen die entsprechenden Behälter auf die Hauptförderschleife 16 gegeben oder von dieser entnommen werden können.

Beispielsweise sind mehrere Zuführ- und/oder Abgabestelle 23 vorgesehen, die die Abgabe von Behältern von den Ein- und/oder Auslagerungseinheiten 18 auf die Ringförderstrecke 16 oder umgekehrt ermöglichen.

In ähnlicher Weise sind mehrere Zuführstellen 24 für Lagerbehälter und/oder Auftragsbehälter vorgesehen, die das Überführen der Lager- und/oder Auftragsbehälter von einem der Kommissionierplätze 20, 21, 22 auf die Ringförderstrecke 16 ermöglichen.

Weitere Abgabestellen 25 ermöglicht die Abgabe von Lagerbehältern von der Ringförderstrecke 16 auf die Lagerbehälterzuführförderstrecken 4 der Kommissionierplätze 20, 21, 22.

Darüber hinaus sind in der Ringförderstrecke 16 Kreuzungsmodule 15 vorgesehen, mit deren Hilfe die Ringförderstrecke 16 in der gleichen Ebene gekreuzt werden kann. Die Kreuzungsmodule 15 dienen bei der Ausführungsform der Fig. 1 dazu, die von einer Auftragsbehälterzuführförderstrecke 14 angelieferten leeren Auftragsbehälter zu den Kommissionierplätzen 20, 21, 22 zuzuführen.

Die Ringförderstrecke 16 dient also beispielsweise dazu, Lagerbehälter mit bestimmten Artikeln, die an einem Kommissionierplatz 20, 21, 22 in einen Auftragsbehälter kommissioniert werden sollen, von den Ein- und/oder Auslagerungseinheiten 18, die die entsprechenden Lagerbehälter aus dem Lager 2 entnommen haben, zu übernehmen und entlang der Ringförderstrecke 16 bis zu dem bestimmten Kommissionierplatz 20, 21, 22 zu fördern, an welchem die Artikel kommissioniert werden sollen. An der geeigneten Abgabestelle 25 werden die Lagerbehälter auf die Lagerbehälterzuführförderstrecke 4 des entsprechenden Kommissionierplatzes 20, 21, 22 übergeben, um zu einer Entnahmeposition 13 des Kommissionierplatzes 20 zugeführt zu werden.

Darüber hinaus dient die Ringförderstrecke 16 zur Aufnahme der zurückgeführten Lagerbehälter an der Zuführstelle 24, um den Lagerbehälter über die Ringförderstrecke 16 zu der entsprechenden Ein- und/oder Auslagerungseinheit 18 für die Einlagerung in das Lager 2 zu transportieren. Darüber hinaus können zusätzliche Abgabestellen für die fertig kommissionierten Auftragsbehälter in der Ringförderstrecke 16 vorgesehen sein, die im gezeigten Ausführungsbeispiel der Fig. 1 nicht verwirklicht sind. Vielmehr kann beim gezeigten Ausführungsbeispiel der Fig. 1 die Abgabe der fertig kommissionierten Auftragsbehälter über die Ein- und/oder Auslagerungseinheiten 18 bzw. das Lager 2 erfolgen.

Die Kommissionierplätze 20, 21 und 22 sind im Ausführungsbeispiel der Fig. 1 identisch ausgebaut und in gleicher Ausrichtung hintereinander entlang der Ringförderstrecke 16 angeordnet, so dass die Beschreibung für einen der Kommissionierplätze 20 auch für die übrigen Kommissionierplätze 21,22 zutrifft.

Jeder Kommissionierplatz 20, 21, 22 weist eine Lagerbehälterzuführförderstrecke 4 und eine Bereitstellungsfördereinrichtung 5 mit einer Entnahmeposition 13 auf, in welcher aus dem Lagerbehälter die Artikel für die Kommissionierung entnommen werden.

Darüber hinaus sind bei dem Kommissionierplatz 20 mehrere Beladeplätze 8 vorgesehen, in denen die leeren Auftragsbehälter bereitgestellt werden, so dass Artikel, die in die Auftragsbehälter kommissioniert werden sollen, in diese abgelegt werden können. Die Auftragsbehälter können ähnlich wie die Lagerbehälter durch verschiedenste Behälter realisiert werden, wobei der Begriff des Behälters sehr allgemein verstanden wird und Kartons, Kunststoffbehälter, Tablare, Paletten und dergleichen einschließt. Auch die Auftragsbehälter können unterteilt sein oder Einsätze aufweisen. Bei der Ausführungsform der Fig. 1 sind in den Kommissionierplätzen jeweils fünf Beladeplätze 8 vorgesehen, die sich am Ende einer Leerbehälterzuführstrecke 7 des Kommissionierplatzes nebeneinander entlang einer Geraden befinden.

Parallel zu den Beladeplätzen 8 ist eine Auftragsbehälterabführförderstrecke 9 vorgesehen, auf welche die fertig kommissionierten Auftragsbehälter von den Beladeplätzen 8 überführt werden können, um über die Zuführstelle 24 auf die Ringförderstrecke 16 abgegeben zu werden.

Parallel zur Auftragsbehälterabführförderstrecke 9 ist eine Lagerbehälterabführförderstrecke 6 angeordnet, die in der Schleuseneinrichtung 10 auf eine gemeinsame Abführförderstrecke 11 mit der Auftragsbehälterabführförderstrecke 9 kombiniert wird.

Die Bereitstellungsfördereinrichtung 5 weist eine Lagerbehälterzuführeinrichtung 28 auf, die mit der Lagerbehälterzuführförderstrecke 4 verbunden ist und die die Lagerbehälter von der Lagerbehälterzuführförderstrecke 4 auf die Bereitstellungsfördereinrichtung 5 übernimmt. Die Bereitstellungsfördereinrichtung 5 ist in dem gezeigten Ausführungsbeispiel als 270°-Kurvenförderer ausgebildet, der in mehrere separate Fördersegmente unterteilt ist, wobei insbesondere drei Fördersegmente 13, 26, 27 vorgesehen sind, die eine Vor - Entnahmeposition 27, die Entnahmeposition 13 und eine Nach - Entnahmeposition 26 für die Lagerbehälter definieren.

Der 270°-Kurvenförderer kann als Rollenförderer mit konischen Rollen oder winklig angeordneten Rollen oder als Gurtförderer mit Gurtbändern ausgeführt sein.

Die von der Lagerbehälterzuführeinrichtung 28 übernommenen Lagerbehälter werden entlang der Förderstrecke des 270°-Kurvenförderers 5 bewegt und zwar zunächst in eine Vor - Entnahmeposition 27, dann in die Entnahmeposition 13 und anschließend in eine Nach - Entnahmeposition 26. Die Lagerbehälterabführeinrichtung 29 ist mit der Lagerbehälterabführförderstrecke 6 verbunden oder durch diese gebildet, auf welcher die Lagerbehälter nach einem abgeschlossenen Kommissioniervorgang abtransportiert werden.

Die für die Kommissionierung erforderliche Vielzahl der Lagerbehälter mit den verschiedenen Artikeln wird der Reihe nach in die Entnahmeposition 13 gebracht, in der die Bedienperson 19 am Bedienerplatz die Artikel aus dem Lagerbehälter entnimmt und in den an einem Beladeplatz 8 bereitgestellten Auftragsbehälter überführt.

Der Kommissionierplatz 20 umfasst eine nicht näher dargestellte Informationseinrichtung, die der Bedienperson 19 anzeigt, wie viele Artikel aus dem an der Entnahmeposition 13 bereitgestellten Lagerbehälter, in welchen der an den Beladeplätzen 8 bereitgestellten Auftragsbehälter zu überführen sind. Die Informationseinrichtung kann dabei ein oder mehrere Einrichtungen, wie Computerbildschirme, Displays, Mehrsegmentanzeigen, Punktmatrizen, Lampen, Hintergrundbeleuchtungen, Lautsprecher, Zeigegeräte und dergleichen aufweisen, die die Bedienperson 19 darin unterstützen, die richtige Anzahl von Artikeln in die richtigen Auftragsbehälter an den Beladeplätzen 8 zu übergeben.

Die Informationseinrichtung erhält von der Steuerungs - und/oder Regelungseinheit die entsprechende Information über die Kommissionieraufträge und die Steuerung des einzelnen Kommis sioniervorgangs.

Darüber hinaus ist an dem Kommissionierplatz 21,22 eine Quittiereinrichtung vorgesehen, die durch Fußschalter, Handschalter, Sensoren, berührungsempfindliche Bildschirme, Mikrophone und dergleichen gebildet sein kann, oder ein oder mehrere diese Komponenten umfassen kann und ebenfalls mit einer Steuerungs - und/oder Regelungseinheit verbunden ist, um die erzeugten Quittiersignale an diese zu übermitteln. Mit der Quittiereinrichtung (nicht gezeigt) kann die Bedienperson 19 mehrere Signale erzeugen, die in einer entsprechenden Steuerungs- und/oder Regelungseinrichtung des Kommissionierplatzes und einer Steuerungs- und/oder Regelungseinheit der gesamten Kommissionieranlage erfasst und verarbeitet werden können.

Die Quittiereinrichtung erzeugt ein erstes Quittiersignal, wenn die Bedienperson 19 die ihr von der Informationseinrichtung angezeigte Anzahl von Artikeln aus dem Lagerbehälter in der Entnahmeposition 13 entnommen hat. Dazu kann die Bedienperson beispielsweise einen Fußschalter bedienen.

Durch das erste Quittiersignal wird in der Steuerungs- und/oder Regelungseinrichtung des Kommissionierplatzes 20 bzw. in der Steuerungs- und/oder Regelungseinheit der Kommissionieranlage bewirkt, dass der in der Entnahmeposition 13 befindliche Lagerbehälter in die Nach - Entnahemposition 26 befördert wird, während gleichzeitig der Lagerbehälter in der Vor - Entnahmeposition 27 in die Entnahmeposition 13 befördert wird. Die Vor - Entnahmeposition 27 bleibt zunächst unbesetzt.

Erst wenn durch die Quittiereinrichtung ein zweites Quittiersignal erzeugt wird, wird der Lagerbehälter aus der Nach - Entnahmeposition 26 auf die Lagerbehälterabführförderstrecke 6 abgegeben und ein neuer Lagerbehälter wird in die Vor - Entnahmeposition 27 nachgeführt.

Das zweite Quittiersignal wird von der Bedienperson 19 erzeugt, wenn die zu kommissionierenden Artikel in dem richtigen Auftragsbehälter 9 abgelegt sind und sich die Bedienperson 19 davon überzeugt hat, dass damit der zu kommissionierende Artikel vollständig in richtiger Anzahl im korrekten Auftragsbehälter enthalten ist.

Sollte die Bedienperson 19 jedoch beim Ablegen der Artikel im Auftragsbehälter feststellen, dass die Kommissionierung mit diesem Artikel noch nicht vollständig erfüllt ist, da beispielsweise zu wenige von diesem Artikel im Auftragsbehälter enthalten sind oder weil ein Artikel bei der Überführung in den Auftragsbehälter beschädigt oder zerstört worden ist, so kann die Bedienperson 19 anstelle des zweiten Quittiersignals ein Reversiersignal erzeugen, sodass der in der Nach - Entnahmeposition 26 befindliche Lagerbehälter wieder in die Entnahmeposition 13 zurückgeführt wird und der dort befindliche Lagerbehälter in die weiterhin freie Vor - Entnahmeposition 27 zurück gestellt wird. Sobald die Bedienperson 19 in diesem Fall die fehlenden Artikel aus dem Lagerbehälter entnommen hat, kann die Bedienperson 19 wiederum das erste Quittiersignal erzeugen, sodass erneut der Lagerbehälter aus den Entnahmeposition 13 in die Nach - Entnahmeposition 26 überführt wird und der auf der Vor - Entnahmeposition 27 befindliche Lagerbehälter in die Entnahmeposition 13 nachrückt. Wenn die Bedienperson 19 nunmehr feststellt, dass die Kommissionierung mit dem entsprechenden Artikel abgeschlossen ist, kann das zweite Quittiersignal erzeugt werden, sodass der auf der Nach - Entnahmeposition 16 befindliche Lagerbehälter endgültig abtransportiert wird und ein neuer Lagerbehälter auf die Vor - Entnahmeposition 27 nachgeführt wird.

Der Vorteil dieses Zwei - Schritt - Quittierverfahrens gegenüber einem Ein - Schritt - Quittierverfahren, bei dem die Quittierung erst nach Abschluss des Kommissioniervorgangs mit dem entsprechenden Artikel erfolgt, besteht darin, dass bereits nach dem ersten Quittiersignal der nächste Lagerbehälter in die Entnahmeposition 13 nachgeführt wird, sodass der Transfer des Lagerbehälters auf die Entnahmeposition 13 bereits durchgeführt werden kann, während die Bedienperson 19 noch den Kommissioniervorgang mit den vorangegangenen Artikeln abschließt und diese in den Auftragsbehältern ablegt. Dadurch kann eine Beschleunigung des Kommissioniervorgangs erzielt werden, da die Bedienperson 19 nach Abschluss des Kommissioniervorgangs mit der zweiten Quittierung nicht mehr auf den Transport eine neuen Lagerbehälters in die Entnahmeposition 13 warten muss, sondern der entsprechende Lagerbehälter bereits in der Entnahmeposition angeordnet ist.

Durch die Kurvenform des 270° - Kurvenförderers 5 wird eine sehr platzsparende Anordnung realisiert, die auch durch die parallele Anordnung der Beladeplätze 8, der Auftragsbehälterabführförderstrecke 9, der Lagerbehälterabführförderstrecke 6 und der Lagerbehälterzuführförderstrecke 4 gegeben ist. Durch die Anordnung der genannten Förderstrecken in einer Ebene ist zudem eine sehr ergonomische Anordnung, insbesondere auch für Wartungs- und Reparaturarbeiten, realisiert.

Die Entnahmeposition 13 kann zusätzlich mit einer Kippeinrichtung ausgestattet sein, die es ermöglicht, den Lagerbehälter in Richtung der Bedienperson 19 zu kippen, um eine erleichterte Entnahme der Artikel zu ermöglichen. Beispielsweise kann der Lagerbehälter um 20° bis 60° aus der Horizontalen, insbesondere 30° bis 45° aus der Horizontalen, gekippt werden. Darüber hinaus kann an der Entnahmeposition 13 eine Waage vorgesehen sein, die es ermöglicht, das Gewicht des Lagerbehälters und der darin befindlichen Artikel zu messen, sodass über Gewichtsunterschiede vor und nach der Entnahme oder durch die Bestimmung des Gesamtgewichts eine Ermittlung der in dem Lagerbehälter befindlichen Artikel möglich ist. Entsprechend kann ein derartiger Kommissionierplatz 20 auch für andere Aufgaben, wie beispielsweise die Durchführung einer Inventur, Verwendung finden.

Durch die Ausbildung als 270° Teilkreis kann die Bereitstellungsfördereinrichtung in Form des 270°-Kurvenförderers 5 auch einen offenen Arbeitsplatz für die Bedienperson 19 bereitstellen, die durch einen vorteilhaften Öffnungswinkel a zwischen der Bedienfront für die Beladeplätze 8 und die Entnahmeposition 13 ergonomisch vorteilhaft ist. Insbesondere kann zwischen der Bedienfront der Entnahmeposition 13, die beispielsweise durch den Verlauf der Kante eines Lagerbehälters, einer Sekante durch den Kurvenbereich oder eine entsprechende Tangente an den Kurvenbereich definiert werden kann, ein Winkel von 100° bis 120°, insbesondere 110°, zur Bedienfront der Auftragsbehälter bzw. der Beladeplätze 8, die in ähnlicher Weise definiert ist, eingestellt werden.

Obwohl die Steuer- und Regelungseinheit der Kommissionieranlage die Lagerbehälter entsprechend dem Kommissionierauftrag für den Auftragsbehälter an dem Beladeplatz 8, der benachbart der Entnahmeposition 13 ist, zuführt, kann es vorteilhaft sein, in der Lagerbehälterzuführförderstrecke 4 eine Sequenziereinrichtung 12 vorzusehen, beispielsweise mit mehreren übereinander angeordneten Lagerplätzen für Lagerbehälter und einer entsprechenden Hubeinrichtung, mit der die Lagerbehälter in die Lagerplätze eingebracht und aus diesen wieder entnommen werden können. Mit der Sequenziereinrichtung können beispielsweise Lagerbehälter, die bereits bei anderen Kommissionieraufträgen, beispielsweise in anderen Kommissionierplätzen 21,22, verwendet werden worden sind, zwischengespeichert werden ohne dass diese in das Lager 2 zurückbefördert werden müssten.

Die Bereitstellung von mehreren Auftragsbehältern parallel zueinander in den mehreren Beladeplätzen 8 hat ebenfalls den Vorteil, dass Lagerbehälter in der Kommissionieranlage insgesamt weniger transportiert werden müssen, wenn beispielsweise die Kommissionieraufträge so abgearbeitet werden, dass entsprechende Auftragsbehälter, die gleiche Artikel empfangen sollen, wie der am ersten Beladeplatz 8 angeordnete Auftragsbehälter, an den weiteren Beladeplätzen bereit gestellt werden, sodass durch einmalige Bereitstellung des Lagerbehälters mit den entsprechenden Artikeln an der Entnahmeposition mehrere Kommissionieraufträge gleichzeitig bedient werden können.

Wie beispielhaft am Kommissionierplatz 21 gezeigt, weisen die Kommissionierplätze 20,21,22 eine Schubanordnung mit mehreren ausziehbaren Plattformen 17 auf, die eine Einstellung der Arbeitshöhe ermöglichen. Die Beladeplätze 8 sowie die Entnahemposition 13 befinden sich auf einer bestimmten Arbeitshöhe, die durch ein Gestell definiert ist, auf welchen die entsprechenden Fördereinrichtungen und Lagerplätze angeordnet sind. Erfindungsgemäß wird in diesem Gestell in der Nähe des Bodens eine Schubanordnung mit einer oder mehreren Plattformen 17 vorgesehen, die der Einstellung der Arbeitshöhe dienen. Wird keine der Plattformen 17 aus dem Gestell herausgezogen, so ergibt sich eine Arbeitshöhe ausgehend von dem Boden des Gebäudes, in dem der Kommissionierplatz angeordnet ist. Soll die Arbeitshöhe verringert werden, kann eine der Plattformen 17 aus dem oder den Gestellen herausgezogen werden, um stufenweise die Arbeitshöhe zu verringern. Jede Bedienperson 19 kann so zu Beginn der Arbeit die gewünschte Arbeitshöhe durch Herausziehen der entsprechenden Plattform 17 einstellen. Da die entsprechenden Plattformen 17 aus einem geeigneten Material gebildet sein können, kann insbesondere bei einem Steharbeitsplatz der Bedienperson 19 eine weichere und/oder wärmere Unterlage bereitgestellt werden, als dies beispielsweise ein Hallenboden sein kann.

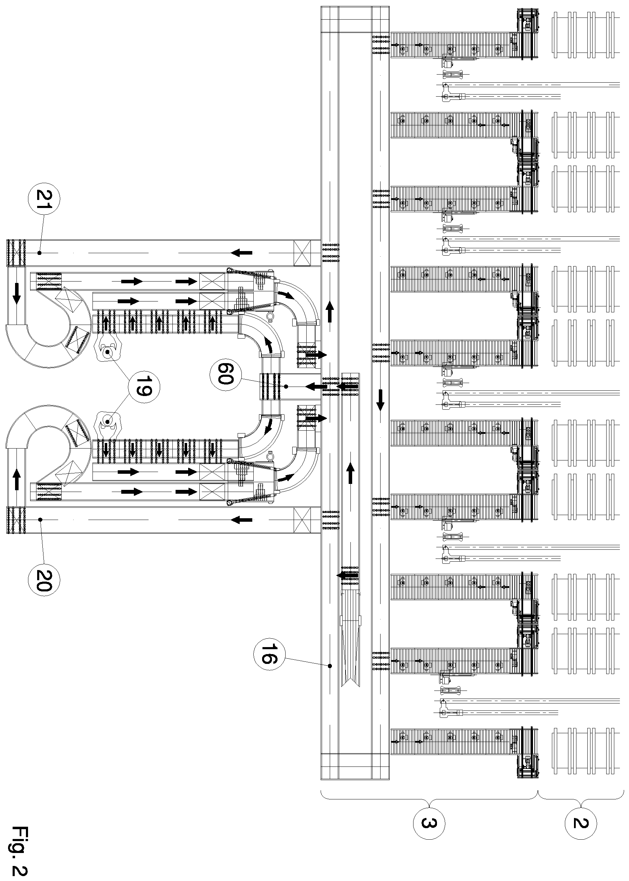

Die Figur 2 zeigt eine weitere Ausführungsform einer erfindungsgemäßen Kommissionieranlage, wobei identische oder vergleichbare Komponenten mit den selben Bezugszeichen versehen sind, sodass sich eine wiederholte Beschreibung derartiger Komponenten erübrigt.

Die Ausführungsform der Figur 2 unterscheidet sich von der Ausführungsform der Figur 1 im Wesentlichen dadurch, dass zwei benachbarte Kommissionierplätze 20, 21' nicht in derselben Ausrichtung hintereinander angeordnet sind, sondern spiegelsymmetrisch nebeneinander angeordnet sind, sodass die Arbeitsplätze der Bedienpersonen 19, 19' unmittelbar ohne Hindernisse gegenseitig erreichbar sind. Auf diese Weise ist es möglich, dass zwei Kommissionierplätze 20, 21' im Bedarfsfall nur von einer einzigen Bedienperson 19 bedient werden, die in einfacher Weise zwischen den beiden Kommissionierplätzen 20, 21' hin und her wechseln kann. Außerdem hat die spiegelsymmetrische Anordnung der Kommissionierplätze 20, 21' auch den Vorteil, dass die Auftragsbehälterzuführförderstrecke zumindest teilweise gemeinsam für beide Kommissionierplätze 20, 21' genutzt werden kann. Entsprechend ist bei der Ausführungsform der Figur 2 eine Kombinationsförderstrecke 60 für die Auftragsbehälterzuführförderstrecke vorgesehen.

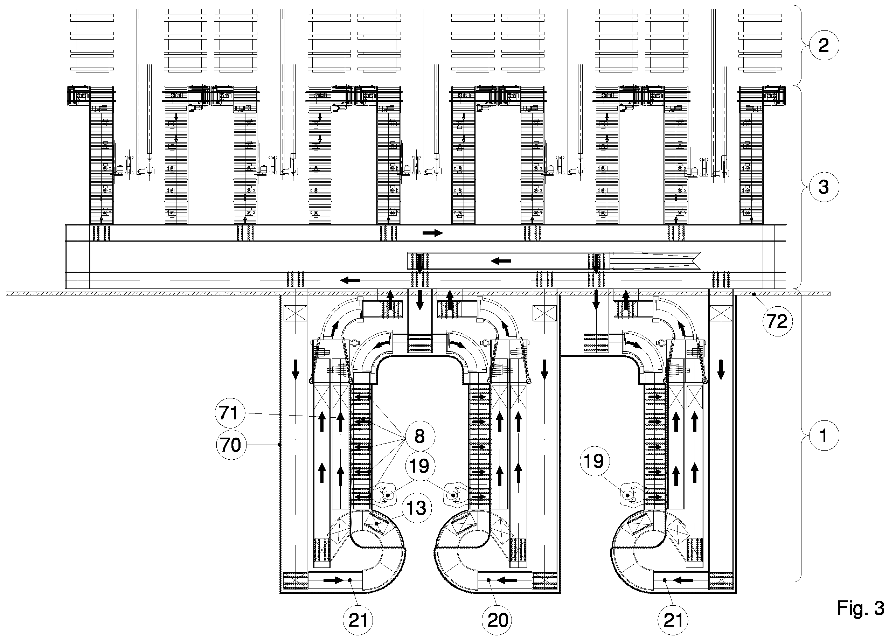

Die Figur 3 zeigt eine weitere Ausführungsform einer Kommissionieranlage, bei welcher die Kommissionierplätze 20, 21, 21' ein Gehäuse 70, 71 aufweisen, welches sämtliche Föderstrecken und Fördereinrichtungen vollständig umschließt, mit Ausnahme der Beladeplätze 8 und der Entnahmeposition 13.

Zudem kann das Lager 2 und die Vorzone 3 von der Kommissionierzone 1 durch eine Trennwand 72 abgetrennt sein, sodass besonders ruhige und ergonomische Arbeitsplätze für die Bedienpersonen 19 existieren.

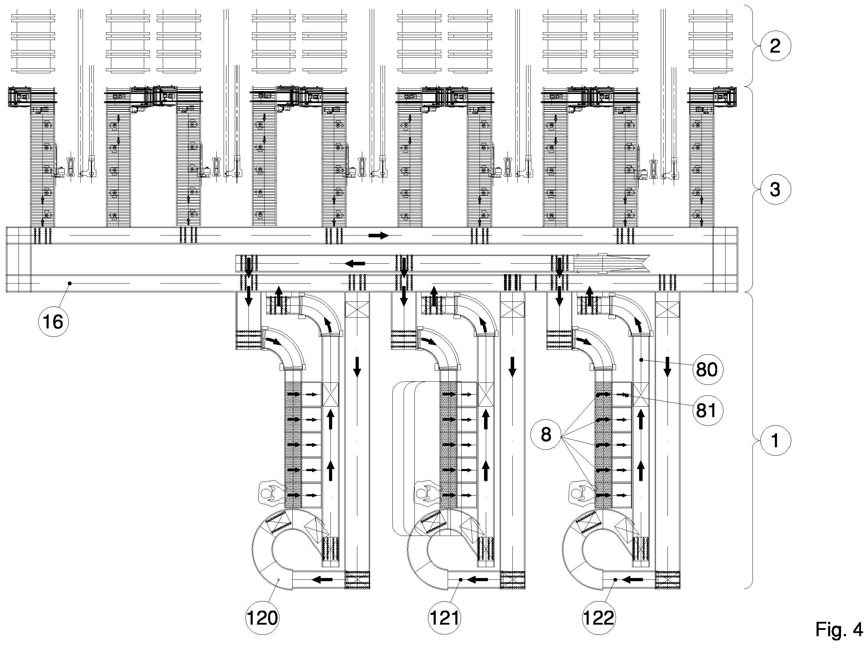

Die Figur 4 zeigt eine vierte Ausführungsform einer Kommissionieranlage mit den Kommissionierplätzen 120, 121, 122. Die Kommissionierplätze 120, 121, 122 unterscheiden sich von den Kommissionierplätzen 20, 21, 22 dadurch, dass statt getrennter Auftragsbehälterabführförderstrecken 9 und Lagerbehälterabführförderstrecken 6 eine kombinierte Abführförderstrecke 80 für Lagerbehälter und Auftragsbehälter vorgesehen ist, sodass sich die Schleuseneinheit 10 einsparen lässt. Stattdessen sind zwischen den Beladeplätzen 8 und der kombinierten Abführförderstrecke 80 für Lagerbehälter und Auftragsbehälter Auftragsbehälterbereitstellungsplätze 81 vorgesehen, in denen die Auftragsbehälter zwischengelagert werden können, falls die kombinierte Abführförderstrecke 80 belegt ist und eine Aufnahme eines abzutransportierenden Auftragsbehälters nicht möglich ist. Darüber hinaus können die Auftragsbehälterbereitstellungsplätze 81 dafür genutzt werden, die Auftragsbehälter zwischenzuparken, um beispielsweise eine Anpassung der Förderaufträge an die Förderkapazitäten der gesamten Fördertechnik vorzunehmen. Sollte beispielsweise auf der Ringförderstrecke 16 bereits ein hohes Verkehrsaufkommen vorliegen, so kann ein entsprechender Auftragsbehälter auf einer Auftragsbehälterbereitstellungsposition 81 zwischengeparkt werden.

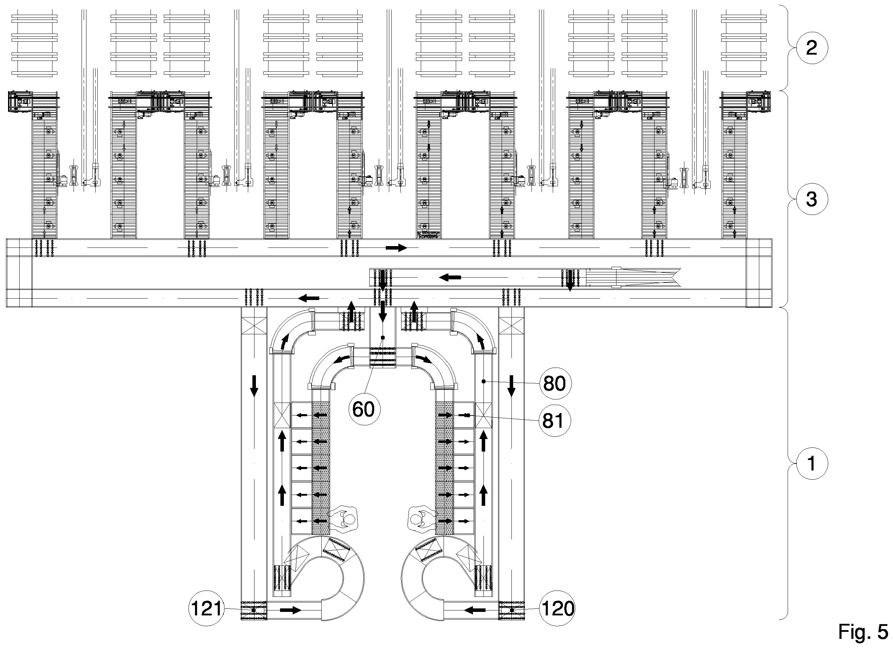

Die Figur 5 zeigt die Kommissionierplätze 120, 121' entsprechend der Darstellung der Figur 2 in einer spiegelsymmetrischen Anordnung, wobei die Kommissionierplätze 120 und 121' sich bis auf die unterschiedliche Ausrichtung und die Kombinationsförderstrecke 60 für die Auftragsbehälterzuführförderstrecke nicht von den Kommissionierplätzen 120 und 121 unterscheiden.

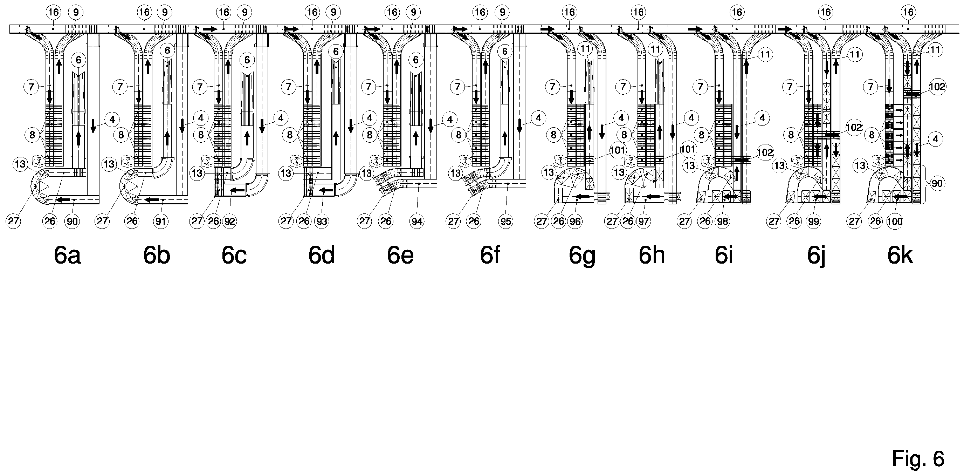

Die Figur 6 zeigt in den Teilbildern a bis k eine Vielzahl verschiedener Kommissionierplätze mit unterschiedlicher Gestaltung der Lagerbehälterzuführförderstrecke, der Lagerbehälterabführförderstrecke, der Auftragsbehälterzuführförderstrecke und der Auftragsbehälterabführstrecke. Außerdem werden verschiedene Varianten von Bereitstellungsförderern 90 bis 100 dargestellt.

In der Figur 6a weist der Kommissionierplatz ebenso wie in den anderen Ausführungsbeispielen der Figuren 6b bis 6k mehrere Beladeplätze 8 auf, die entlang einer Reihe angeordnet sind. Zu den Beladeplätzen 8 führt eine Auftragsbehälterzuführförderstrecke 7, mit der die leeren Auftragsbehälter in die Beladeplätze 8 überführt werden können. Parallel zu den Beladeplätzen 8 und der Auftragsbehälterzuführförderstrecke 7 ist eine Auftragsbehälterabführförderstrecke 9 vorgesehen, auf der die fertig kommissionierten Auftragsbehälter wieder abtransportiert werden können. Sowohl die Auftragsbehälterzuführförderstrecke 7 als auch die Auftragsbehälterabführförderstrecke 9 münden in eine Hauptstrecke 16, die in gleicher Weise wie die Ringförderstrecke 16 der vorangegangenen Ausführungsbeispiels ausgebildet sein kann, aber auch andere Formen aufweisen kann.

Benachbart zu dem ersten Beladeplatz 8 weist die Bereitstellungsfördereinrichtung 90 des Ausführungsbeispiels der Figur 6a wieder eine Entnahmeposition 13 für einen Lagerbehälter sowie eine Nach - Entnahmeposition 26 und eine Vor - Entnahmeposition 27 auf. Auch diese Positionen sind in identischer Weise, wie bei den vorangegangenen Ausführungsbeispielen auch bei den Ausführungsbeispielen der Figuren 6b bis 6k gegeben, auch wenn die fördertechnischen Anlagen hierzu unterschiedlich ausgebildet sind.

Bei dem Bereitstellungsförderer 90 bei der Ausführungsform der Figur 6a sind beispielsweise zwei lineare Förderstrecken mit einer halbkreisförmigen Förderstrecke kombiniert, wobei die Entnahemposistion 13, die Nach - Entnahmeposition 26 und die Vor - Entnahmeposition 27 auf die verschiedenen Teilförderstrecken verteilt sind. Bei der Ausführungsform der Figur 6a sind zudem zwei getrennte Förderstrecken für die Zufuhr von Lagerbehältern und den Abtransport der Lagerbehälter gegeben, nämlich die Lagerbehälterzuführförderstrecke 4 und die Lagerbehälterabführförderstrecke 6, die in dem gezeigten Ausführungsbeispiel die einheitliche Transportebene verlässt und durch einen schrägen Verlauf der Förderstrecke in eine Ebene darüber oder darunter geführt wird.

Bei dem Ausführungsbeispiel der Figur 6a sind die Lagerbehälterzuführförderstrecke 4 und die Lagerbehälterabführförderstrecke rechtwinklig zu den linearen Teilförderstrecken des Bereitstellungsförderers 90 angeordnet. Bei der Ausführungsform der Figur 6b, die im Wesentlichen mit der Ausführungsform der Figur 6a vergleichbar ist, ist die Anbindung der Lagerbehälterabführförderstrecke 6 über einen 90° - Kurvenförderer gegeben.

Bei den Ausführungsbeispielen der Figuren 6c und 6d sind die Bereitstellungsförderer 92 und 93 durch zwei lineare Förderstrecken gebildet, die durch einen Querförderer miteinander verbunden sind, wobei wiederum die Entnahmeposition 13, die Vor - Entnahmeposition 27 und die Nach - Entnahmeposition 26 auf diesen Teilförderstrecken verteilt sind. Bei der Ausführungsform der Figur 6c ist die Anbindung der Lagerbehälterzuführförderstrecke 4 und der Lagerabführförderstrecke 6 jeweils über 90° - Kurvenförderer verwirklicht, während bei der Ausführungsform der Figur 6d die Lagerbehälterabführförderstrecke 6 rechtwinklig zu der linearen Teilförderstrecke des Bereitstellungsförderers 93 angeordnet ist.

Die Figuren 6e bis 6f zeigen wiederum vergleichbare Ausführungsformen zu den Ausführungsformen der Figuren 6c und 6d, wobei hier wieder unterschiedliche Anbindungen der Lagerbehälterzuführförderstrecke 4 und der Lagerbehälterabführförderstrecke 6 zu den Teilförderstrecken der Bereitstellungsförderer 94 und 95 verwirklicht sein können. Der wesentliche Unterschied der Ausführungsformen der Figuren 6e und 6f zu den Ausführungsformen der Figuren 6c und 6d besteht darin, dass die über einen Querförderer miteinander verbundenen Teilförderstrecken der Bereitstellungsförderer 94, 95 leicht geschwungen ausgebildet sind, sodass die Entnahmeposition 13 in einem vorbestimmten Winkel zu den Beladeplätzen 8 angeordnet ist.

Die Ausführungsformen der Figuren 6g bis 6k zeigen Varianten der Bereitstellungsförderer 96 bis 100, die jeweils durch eine lineare Teilförderstrecke und einen 180° - Kurvenförderer gebildet sind, wobei die Entnahmeposition 13, die Vor - Entnahmeposition 27 und die Nach - Entnahmeposition 26 wiederum verteilt auf die linearen Teilförderstrecken und den 180° - Kurvenförderer angeordnet sein können. Die Ausführungsformen der Figuren 6g bis 6k unterscheiden sich im Wesentlichen durch die unterschiedliche Gestaltung der Lagerbehälterzuführförderstrecke 4, der Lagerbehälterabführförderstrecke 6 sowie der Auftragsbehälterabführförderstrecke, die bei diesen Ausführungsformen im Wesentlichen in die Lagerbehälterabführförderstrecke integriert ist, sodass eine kombinierte Abführförderstrecke 11 für Lagerbehälter und fertig kommissionierte Auftragsbehälter vorgesehen ist.

Bei den Ausführungsformend der Figuren 6g und 6h ist eine Übergabestelle 101 für die fertig kommissionierten Auftragsbehälter vorgesehen, an welcher die fertig kommissionierten Auftragsbehälter auf die kombinierte Abführförderstrecke 11 für Lagerbehälter und Auftragsbehälter übergeben werden.

Bei den Ausführungsformen der Figuren 6i bis 6k ist eine Hub - Wechsel - Einrichtung 102 vorgesehen, mit der sowohl fertig kommissionierte Auftragsbehälter auf die kombinierte Abführförderstrecke 11, als auch Lagerbehälter auf die kombinierte Abführförderstrecke 11 umgesetzt werden können. Zudem ist die Hub - Wechsel - Vorrichtung 102 auch dafür vorgesehen, Lagerbehälter, die auf der Lagerbehälterzuführförderstrecke 4 transportiert werden, auf einen seitlich versetzten Zweig der Lagerbehälterzuführförderstrecke 4 umzusetzen.

## Patentansprüche

1. Verfahren zur Kommissionierung von verschiedenen Artikeln in einen Auftragsbehälter, bei welchem mindestens ein Auftragsbehälter an mindestens einem Beladeplatz (8) bereitgestellt wird, in welchen die verschiedenen Artikel aus Lagerbehälter kommissioniert werden, wobei nacheinander Lagerbehälter mit verschiedenen Artikeln automatisiert über eine Lagerbehälterzuführeinrichtung (4) für die Kommissionierung zugeführt und nach der Kommissionierung über eine Lagerbehälterabführeinrichtung (6) wieder abgeführt werden, wobei die Lagerbehälters zur Kommissionierung an einer Entnahmeposition (13) bereitgestellt werden, so dass die Artikel aus dem jeweiligen Lagerbehälter entnommen und in den Auftragsbehälter überführt werden können, wobei nach dem Entnehmen der in den Auftragsbehälter zu kommissionierenden Artikel ein erstes Quittiersignal erzeugt wird, so dass der Lagerbehälters in eine Nach - Entnahmeposition (26) befördert wird, während gleichzeitig der nächste Lagerbehälter, der in einer Vor - Entnahmeposition (27) bereitgehalten worden ist, in die Entnahmeposition (13) überführt wird, **dadurch gekennzeichnet, dass** die Bewegung des Lagerbehälters in der Lagerbehälterzuführeinrichtung (4) und der Lagerbehälterabführeinrichtung (6) separat und unabhängig von der Bewegung der Lagerbehälter in der Vor - Entnahmeposition (27), der Entnahmeposition (13) und der Nach - Entnahmeposition (26) erfolgt, wobei die Entnahmeposition, die Vor - Entnahmeposition und die Nach - Entnahmeposition jeweils durch ein separat betätigbares Fördersegment (13,26,27) gebildet sind.

2. Verfahren nach Anspruch 1,
**dadurch gekennzeichnet, dass**
ein zweites Quittiersignal erzeugt wird, wenn der oder die aus dem Lagerbehälter zu entnehmenden Artikel in dem Auftragsbehälter abgelegt sind, wobei nach dem zweiten Quittiersignal der Lagerbehälter aus der Nach - Entnahmeposition (26) weg bewegt wird, und/oder dass ein Reversiersignal erzeugt wird, wenn nach dem ersten Quittiersignal festgestellt wird, dass die Kommissionierung aus dem Lagerbehälter, der in die Nach - Entnahmeposition (26) verschoben worden ist, nicht oder nicht korrekt abgeschlossen worden ist, so dass der Lagerbehälter aus der Nach - Entnahmeposition (26) in die Entnahmeposition (13) zurück geführt wird.

3. Verfahren nach einem der vorhergehenden Ansprüche,
**dadurch gekennzeichnet, dass**
die Lagerbehälter abhängig und/oder unabhängig von der Bewegung anderer Lagerbehälter in die Entnahmeposition (13), die Nach- Entnahmeposition (26) und/oder die Von-Entnahmeposition (27) bewegt werden und/oder dass gemäß einem erfassten Kommissionieranftrag die erforderlichen Lagerbehälter in einer vorbestimmten Reihenfolge in einer Entnahmeposition (13) eines Kommissionierplatzes (20, 21, 21', 22, 120, 121, 121', 122) bereitgestellt werden.

4. Verfahren nach Anspruch 3,
**dadurch gekennzeichnet, dass**
die Lagerbehälter bevorzugt zur Bearbeitung eines ersten Kommissionierauftrags bereitgestellt werden, aber abhängig vom Inhalt weiterer Kommissionieraufträge zusätzliche Auftragsbehälter für weitere Kommissionieraufträge an weiteren Beladeplätzen (8) bereitgestellt werden.

5. Kommissionierplatz (20,21,22) zur Kommissionierung von verschiedenen Artikeln in mindestens einen Auftragsbehälter, insbesondere zur Durchführung des Verfahrens nach einem der vorhergehenden Ansprüche, wobei der Kommissionierplatz (20, 21, 21', 22, 120, 121, 121', 122) mindestens einem Beladeplatz (8) aufweiset, man dem mindestens ein Auftragsbehälter bereitgestellt wird, in welchen die verschiedenen Artikel aus Lagerbehältern kommissioniert werden, wobei mindestens eine Entnahmeposition (13) vorgesehen ist, in der nacheinander Lagerbehälter mit verschiedenen Artikeln automatisiert bereitgestellt werden, so dass die Artikel aus dem jeweiligen Lagerbehälter entnommen und in den Auftragsbehälter überführt werden können, wobei eine Lagerbehälterzuführeinrichtung (4) zum Antransport der Lagerbehälter und eine Lagerbehälterabführeinrichtung (6) zum Antransport der Lagerbehälter vorgesehen sind, wobei weiterhin eine Nach - Entnahmeposition (26) zur Aufnahme eines Lagerbehälters aus der Entnahmeposition (13) und eine Vor - Entnahmeposition (27) zur Aufnahme eines Lagerbehälters, bevor dieser in die Entnahmeposition gelangt, angeordnet sind, wobei weiterhin eine Einrichtung zur Erzeugung eines Quittiersignals vorgesehen ist, dadurch gekennezichnet, das die Lagerbehälterzuführeinrichtung (4) und die Lagerbehälterabführeinrichtung (6) separat und unabhängig von einer Bewegung der Lagerbehälter in der Nach - Entnahmeposition (26), der Entnahmeposition (13) und der Vor - Entnahmeposition (27) betätigbar ist, wobei die Entnahmeposition, die Vor - Entnahmeposition und die Nach - Entnahmeposition jeweils durch ein separat betätigbares Fördersegment (13,26,27) gebildet sind, und wobei die Einrichtung zur Erzeugung eines Quittiersignals so ausgebildet ist, dass ein erstes Quittiersignal erzeugt werden kann, wenn aus dem Lagerbehälters in der Entnahmeposition der oder die zu kommissionierenden Artikel entnommen worden sind, wobei eine Steuerungs - und/oder Regelungseinrichtung das erste Quittiersignal empfängt und den Lagerbehälter aus der Entnahmeposition in die Nach - Entnahmeposition befördert, während gleichzeitig der nächste Lagerbehälter in der Vor - Entnahmeposition in die Entnahmeposition überführt wird.

6. Kommissionierplatz nach Anspruch 5,
**dadurch gekennzeichnet, dass**
die Einrichtung zur Erzeugung eines Quittiersignals ein zweites Quittiersignal erzeugen kann, wenn der oder die aus dem Lagerbehälter zu entnehmenden Artikel in dem Auftragsbehälter abgelegt sind, wobei die Steuerungs - und/oder Regelungseinrichtung das zweite Quittiersignal empfängt und den Lagerbehälter aus der Nach - Entnahmeposition (26) weg bewegt.

7. Kommissionierplatz nach einem der Ansprüche 5 oder 6,
mit mindestens einer Entnahmeposition (13) für Lagerbehälter und mindestens einem Beladeplatz (8) für Auftragsbehälter,
wobei die Entnahmeposition und der Beladeplatz auf einem oder mehreren Gestellen gelagert sind, welche eine bestimmte Arbeitshöhe definieren,
**dadurch gekennzeichnet, dass**
eines oder mehrere der Gestelle mindestens eine Schubanordnung mit mindestens einer Plattform (17) an der der Entnahmeposition oder dem Beladeplatz gegenüber liegenden Seite des Gestells in der Nähe des Bodens aufweisen, mit der eine Verringerung der Arbeitshöhe möglich ist.

8. Kommissionierplatz nach einem der Ansprüche 5 bis 7,
**dadurch gekennzeichnet, dass**
mindestens zwei oder mehr, insbesondere fünf Beladeplätze (8) für jeweils mindestens einen Auftragsbehälter vorgesehen sind, die insbesondere in einer Reihe entlang einer Gerade angeordnet sind, und/oder dass die Entnahmeposition (13) mit ihrer Bedienfront in einem Winkel (α) von 100° bis 120°, insbesondere 110° zur Bedienfront des mindestens eines Beladeplatzes angeordnet ist.

9. Kommissionierplatz nach einem der Ansprüche 5 bis 8,
**dadurch gekennzeichnet, dass**
eine Auftragsbehälterzuführförderstrecke und eine Auftragsbehälteräbfuhrförderstrecke sowie eine Lagerbehälterzuführförderstrecke und eine Lagerbehälteräbführförderstrecke vorgesehen sind, wobei zumindest teilweise die Auftragsbehälterabführförderstrecke und die Lagerbehälterabführförderstrecke durch eine einzelne Förderstrecke gebildet sind.

10. Kommissionierplatz nach einem der Ansprüche 5 bis 9,
**dadurch gekennzeichnet, dass**
eine Lagerbehälterzuführförderstrecke eine Sequenziereinheit (12) umfasst.

11. Kommissionieranlage mit mindestens einem, vorzugsweise mehreren Kommissionierplätzen (20, 21, 21', 22, 120, 121, 121', 122) nach einem der Ansprüche 5 bis 10, mit einem Lager für eine Vielzahl verschiedener Artikel, mindestens einer Ein - und/oder Auslagerungseinheit für in dem Lager gelagerte Lagerbehälter und einer Hauptförderschleife, die in einer geschlossenen Ringbahn ausgebildet ist und Zuführ - und Abgabestellen für Lagerbehälter und Auftragsbehälter zu der mindestens einen Ein - und/oder Auslagerungseinheit und dem mindestens einen Kommissionierplatz aufweist.

12. Kommissionieranlage nach Anspruch 11,
**dadurch gekennzeichnet, dass**
die Fördertechnik der Hauptförderschleife (16), des Kommissionerplatzes (20, 21, 21', 22, 120, 121, 121', 122), der Ein - und/oder Auslagerungseinheit (18) für Lagerbehälter und/oder der Zuführ - und Abgabestelle für Lagerbehälters und Auftragsbehälter in einer Ebene angeordnet sind und/oder die Zuführstrecke für Auftragsbehälter die Hauptförderschleife (16) in der gleichen Ebene kreuzt.

13. Kommissionieranlage nach einem der Ansprüche 11 oder 12,
**dadurch gekennzeichnet, dass**
der Kommissionierplatz ein Gehäuse aufweist und/oder der Kommissionierplatz von dem Lager und einer dem Lager vorgelagerten Förderzone durch eine Trennwand getrennt ist und/oder mehrere Kommissionierplätze (20, 21, 21', 22, 120, 121, 121', 122) mit gleicher Ausrichtung hintereinander oder spiegelsymmetrisch nebeneinander angeordnet sind.

## Claims

1. Method for picking different items into an order container, wherein at at least one loading area (8) at least one order container is provided, into which the different items are picked from storage containers, wherein the storage containers with different items are fed one after another for the picking via a storage container feeding device (4) in an automated way and are discharged again after the picking via a storage container discharging device (6), wherein the storage containers are provided at a withdrawal position (13) for the picking, so that the items from the respective storage containers can be withdrawn and can be transferred into the order container, wherein after withdrawing the items to be picked into the order container, a first acknowledgement signal is generated, so that the storage container is conveyed into a post-withdrawal position (26), whereas the next storage container, which has been kept prepared in a pre-withdrawal position (27), is transferred at the same time into the withdrawal position (13),
**characterized in that**
the movement of the storage container in the storage container feeding device (4) and the storage container discharging device (6) takes place separately and independently from the movement of the storage containers in the pre-withdrawal position (27), the withdrawal position (13) and the post-withdrawal position (26), wherein the withdrawal position, the pre-withdrawal position and the post-withdrawal position are respectively formed by a conveyor segment (13, 26, 27) which can be actuated separately.

2. The method according to claim 1,
**characterized in that**
a second acknowledgement signal is generated when the item or items to be withdrawn from the storage container are deposited in the order container, wherein the storage container is moved away from the post-withdrawal position (26) after the second acknowledgement signal,
and/or **in that** a reversing signal is generated when after the first acknowledgement signal it is detected that the picking from the storage container, which has been displaced into the post-withdrawal position (26) has not been completed or has not been correctly completed, so that the storage container is brought back from the post-withdrawal position (26) into the withdrawal position (13).

3. The method according to any one of the preceding claims,
**characterized in that**
the storage containers are moved dependently and/or independently from the movement of other storage containers into the withdrawal position (13), the post-withdrawal position (26) and/or the pre-withdrawal position (27),
and/or **in that**, according to a determined picking order, the required storage containers are provided in a withdrawal position (13) of a picking area (20, 21, 21', 22,120,121,121', 122) in a predetermined sequence.

4. The method according to claim 3,
**characterized in that**
the storage containers are preferably provided for processing a first picking order, however, depending on the content of further picking orders, additional order containers for further picking orders are provided at further loading areas (8).

5. Picking area (20,21,22) for picking different items into at least one order container, particularly for performing the method according to any one of the preceding claims, wherein the picking area (20, 21, 21', 22, 120, 121, 121', 122) has at least one loading area (8), at which at least one order container is provided, in which the different items are picked from storage containers, wherein at least one withdrawal position (13) is provided, in which the storage containers are provided with different items one after another in an automated way, so that the items can be withdrawn from the respective storage containers and can be transferred into the order container, wherein a storage container feeding device (4) is provided for feeding the storage containers and a storage container discharging device (6) is provided for discharging the storage containers, wherein a post-withdrawal position (26) for receiving a storage container from the withdrawal position (13) and a pre-withdrawal position (27) for receiving a storage container before it reaches the withdrawal position are further arranged, wherein a device for generating an acknowledgement signal is further provided,
**characterized in that**
the storage container feeding device (4) and the storage container discharging device (6) can be actuated separately and independently from a movement of the storage container in the post-withdrawal position (26), the withdrawal position (13) and the pre-withdrawal position (27), wherein the withdrawal position, the pre-withdrawal position and the post-withdrawal position are each formed by a conveyor segment (13,26,27), which can be actuated separately, and wherein the device for generating an acknowledgement signal is configured such that a first acknowledgement signal can be generated when the item or items to be picked are withdrawn from the storage container in the withdrawal position, wherein a control and/or regulation device receives the first acknowledgement signal and conveys the storage container from the withdrawal position into the post-withdrawal position, while at the same time the next storage container in the pre-withdrawal position is transferred into the withdrawal position.

6. The picking area according to claim 5,
**characterized in that**
the device for generating an acknowledgement signal can generate a second acknowledgement signal when the item or items to be withdrawn from the storage container are deposited in the order container, wherein the control and/or regulation device receives the second acknowledgement signal and moves the storage container away from the post-withdrawal position (26).

7. The picking area according to any one of claims 5 or 6 with at least one withdrawal position (13) for storage containers and at least one loading area (8) for order containers, wherein the withdrawal position and the loading area are stored on one or several racks defining a determined working height,
**characterized in that**
one or more of the racks have at least one drawer arrangement with at least one platform (17) close to the floor, on the side of the rack opposite to the withdrawal position or to the loading area, with which a reduction of the working height is possible.

8. The picking area according to any one of claims 5 to 7,
**characterized in that**
at least one or more, particularly five loading areas (8) are provided, each for at least one order container, which are particularly arranged in a row along a straight line,
and/or **in that** the withdrawal position (13) with its operating front is positioned at an angle (α) of 100° to 120°, particularly of 110°, to the operating front of the at least one loading area.

9. The picking area according to any one of claims 5 to 8,
**characterized in that**
an order container feeding conveyor route and an order container discharging conveyor route as well as a storage container feeding conveyor route and a storage container discharging conveyor route are provided, wherein the order container discharging conveyor route and the storage container discharging conveyor route are at least partially formed by a single conveyor route.

10. The picking area according to any one of claims 5 to 9,
**characterized in that**
a storage container feeding conveyor route comprises a sequencing unit (12).

11. Picking system with at least one, preferably more picking areas (20, 21, 21', 22, 120, 121, 121', 122) according to any one of claims 5 to 10, with a storage for a plurality of different items, at least one storage and/or retrieval unit for the storage containers stored in the storage and a main conveyor loop, which is configured in a closed ring path and has feeding and delivery points for storage containers and order containers to the at least one storage and/or retrieval unit and the at least one picking area.

12. The picking system according to claim 11,
**characterized in that**
the conveyor technique of the main conveyor loop (16), the picking area (20, 21, 21', 22, 120, 121, 121', 122), the storage and/or retrieval unit (18) for storage containers and/or the feeding and delivery points for the storage containers and order containers are arranged on a plane and/or **in that** the feeding tour for the order containers intersects with the main conveyor loop (16) on the same plane.

13. The picking system according to any one of claims 11 or 12,
**characterized in that**
the picking area has a housing and/or **in that** the picking area of the storage and a conveyor zone upstream of the storage are separated by a separating wall and/or **in that** several picking areas (20, 21, 21', 22, 120, 121, 121', 122) are arranged behind one another or mirror-symmetrically next to one another with the same orientation.

## Revendications

1. Procédé de préparation de différents articles dans un récipient de commande, pour lequel au moins un récipient de commande est mis à disposition sur au moins und emplacement de chargement (8), dans lequel les différents articles sont préparés à partir des récipients de stockage, dans lequel des récipients de stockage avec différents articles sont amenés les uns après les autres de manière automatisée par le biais d'un dispositif d'amenée de récipients de stockage (4) pour la préparation et sont évacués à nouveau après la préparation par le biais d'un dispositif d'évacuation de récipient de stockage (6), dans lequel les récipients de stockage sont mis à disposition pour la préparation dans une position de retrait (13) de sorte que les articles puissent être retirés du récipient de stockage respectif et transférés dans le récipient de commande,
dans lequel après le retrait des articles à préparer dans le récipient de commande, un premier signal d'acquittement est généré, de sorte que le récipient de stockage soit transporté dans une position de retrait ultérieur (26), alors que simultanément le récipient de stockage suivant qui a été mis à disposition dans une position de retrait préalable (27), est transféré dans la position de retrait (13), **caractérisé en ce que** le mouvement du récipient de stockage dans le dispositif d'amenée de récipient de stockage (4) et le dispositif d'évacuation de récipient de stockage (6) est effectué séparément et indépendamment du mouvement des récipients de stockage dans la position de retrait préalable (27), la position de retrait (13) et la position de retrait ultérieur (26), dans lequel la position de retrait, la position de retrait préalable et la position de retrait ultérieur sont formées respectivement par un segment de transport (13, 26, 27) actionnable séparément.

2. Procédé selon la revendication 1,
**caractérisée en ce que**
un second signal d'acquittement est généré si le ou les articles à retirer du récipient de stockage sont déposés dans le récipient de commande, dans lequel après le second signal de d'acquittement, le récipient de stockage est déplacé loin de la position de retrait ultérieur (26) et/ou **en ce qu'**un signal d'inversion est généré s'il est constaté après le premier signal d'acquittement que la préparation à partir du récipient de stockage qui a été déplacé dans la position de retrait ultérieur (26), n'a pas été terminée ou pas correctement de sorte que le récipient de stockage soit ramené de la position de retrait ultérieur (26) à la position de retrait (13).

3. Procédé selon l'une des revendications précédentes,
**caractérisée en ce que**
les récipients de stockage sont déplacés en fonction et/ou indépendamment du mouvement d'autres récipients de stockage dans la position de retrait (13), la position de retrait ultérieur (26) et/ou la position de retrait préalable (27) et/ou **en ce que** selon une commande de préparation détectée, les récipients de stockage nécessaires sont mis à disposition dans un ordre prédéterminé dans une position de retrait (13) d'un emplacement de préparation (20, 21, 21', 22, 120, 121, 121', 122).

4. Procédé selon la revendication 3,
**caractérisé en ce que**
les récipients de stockage sont mis à disposition de préférence pour le traitement d'une première commande de préparation mais en fonction du contenu d'autres commandes de préparation, des récipients de commande supplémentaires pour d'autres commandes de préparation sont mis à disposition sur d'autres emplacements de chargement (8).

5. Emplacement de préparation (20, 21, 22) pour la préparation de différents articles dans au moins un récipient de commande, en particulier pour la réalisation du procédé selon l'une des revendications précédentes, dans laquelle l'emplacement de préparation (20, 21, 21', 22, 120, 121, 121', 122) présente au moins un emplacement de chargement (8), sur lequel au moins un récipient de commande est mis à disposition, dans lequel les différents articles sont préparés à partir des récipients de stockage, dans laquelle au moins une position de retrait (13) est prévue, dans laquelle des récipients de stockage avec différents articles sont mis à disposition les uns après les autres de manière automatisée de sorte que les articles puissent être retirés du récipient de stockage respectif et transférés dans le récipient de commande, dans laquelle un dispositif d'amenée de récipient de stockage (4) est prévu pour l'arrivée des récipients de stockage et un dispositif d'évacuation de récipient de stockage (6) est prévu pour le départ des récipients de stockage, dans laquelle en outre, une position de retrait ultérieur (26) est agencée pour la réception d'un récipient de stockage de la position de retrait (13) et une position de retrait préalable (27) est agencée pour la réception d'un récipient de stockage, avant que celui-ci ne parvienne dans la position de retrait, dans laquelle en outre un dispositif pour la génération d'un signal de d'acquittement est prévu, **caractérisé en ce que** le dispositif d'amenée de récipient de stockage (4) et le dispositif d'évacuation de récipient de stockage (6) sont actionnables séparément et indépendamment d'un mouvement des récipients de stockage dans la position de retrait ultérieur (26), la position de retrait (13) et la position de retrait préalable (27), dans lequel la position de retrait, la position de retrait préalable et la position de retrait ultérieur sont formées respectivement par un segment de transport (13, 26, 27) actionnable séparément, et dans lequel le dispositif pour la génération d'un signal d'acquittement est réalisé de sorte qu'un premier signal d'acquittement puisse être généré si le ou les articles à préparer ont été retirés du récipient de stockage dans la position de retrait, dans lequel un dispositif de commande et/ou de régulation reçoit le premier signal de d'acquittement et transporte le récipient de stockage de la position de retrait à la position de retrait ultérieur, alors que simultanément, le récipient de stockage suivant est transféré dans la position de retrait préalable à la position de retrait.

6. Emplacement de préparation selon la revendication 5,
**caractérisé en ce que**
le dispositif pour la génération d'un signal de d'acquittement peut générer un second signal d'acquittement si le ou les articles à retirer du récipient de stockage sont déposés dans le récipient de commande, dans lequel le dispositif de commande et/ou de régulation reçoit le second signal d'acquittement et déplace le récipient de stockage loin de la position de retrait ultérieur (26).

7. Emplacement de préparation selon l'une des revendications 5 ou 6,
avec au moins une position de retrait (13) pour des récipients de stockage et au moins un emplacement de chargement (8) pour des récipients de commande, dans laquelle la position de retrait et l'emplacement de chargement sont logés sur un ou plusieurs bâtis qui définissent une hauteur de travail déterminée,
**caractérisé en ce que**
un ou plusieurs des bâtis présentent au moins un agencement de poussée avec au moins une plateforme (17) sur le côté opposé à la position de retrait ou l'emplacement de chargement du bâti à proximité du fond, avec lequel une diminution de la hauteur de travail est possible.

8. Emplacement de préparation selon l'une des revendications 5 à 7,
**caractérisé en ce que**
au moins deux ou plus en particulier cinq emplacements de chargement (8) sont prévus pour respectivement au moins un récipient de commande qui sont agencés en particulier dans une rangée le long d'une droite et/ou **en ce que** la position de retrait (13) est agencée avec sa partie avant de commande dans un angle (α) de 100 à 120°, en particulier de 110° par rapport à sa partie avant de commande de l'au moins un emplacement de chargement.

9. Emplacement de préparation selon l'une des revendications 5 à 8,
**caractérisé en ce que**
une voie de transport d'amenée de récipient de commande et une voie de transport d'évacuation de récipient de commande ainsi qu'une voie de transport d'amenée de récipient de stockage et une voie de transport d'évacuation de récipient de stockage sont prévues, dans lequel au moins partiellement la voie de transport d'évacuation de récipient de commande et la voie de transport d'évacuation de récipient de stockage sont formées par une voie de transport individuelle.

10. Emplacement de préparation selon l'une des revendications 5 à 9,
**caractérisé en ce qu'**une voie de transport d'amenée de récipient de stockage comporte une unité de séquençage (12).

11. Installation de préparation avec au moins uns, de préférence plusieurs emplacements de préparation (20, 21, 21', 22, 120, 121, 121', 122) selon l'une des revendications 5 à 10, avec un stockage pour une pluralité de différents articles, au moins une unité de stockage d'entrée et/ou de sortie pour des récipients de stockage logés dans le stockage et une boucle de transport principale qui est réalisée dans une bande annulaire fermée et présente des points d'amenée et de sortie pour des récipients de stockage et récipients de commande vers l'au moins une unité de stockage d'entrée et/ou de sortie et l'au moins un emplacement de préparation.

12. Installation de préparation selon la revendication 11,
**caractérisée en ce que**
la technique de transport de la boucle de transport principale (16), de l'emplacement de préparation (20, 21, 21', 22, 120, 121, 121', 122), de l'unité de stockage d'entrée et/ou de sortie (18) pour des récipients de stockage et/ou des points d'amenée et de sortie pour des récipients de stockage et récipients de commande sont agencés dans un plan et/ou la voie d'amenée pour des récipients de commande croise la boucle de transport principale (16) dans le même plan.

13. Installation de préparation selon l'une des revendications 11 ou 12,
**caractérisée en ce que**
l'emplacement de préparation présente un boîtier et/ou l'emplacement de préparation est séparé du stockage et d'une zone de transport logée en amont du stockage par une paroi de séparation et/ou plusieurs emplacements de préparation (20, 21, 21', 22, 120, 121, 121', 122) sont agencés avec une même orientation les uns derrière les autres ou symétriques les uns à côté des autres.
